# EUROPEAN PATENT APPLICATION

(11) **EP 1 703 625 A2**
(43) Date of publication of application: **20.09.2006**
(21) Application number: 05254705.6
(22) Date of filing: 27.07.2005
(51) Int. Cl.: H02M 3/158

(54) **Direct DC Converter**

(30) Priority: 18.03.2005 JP 2005080640
(71) Applicant: FUJITSU LIMITED, Kawasaki-shi, Kanagawa 211-8588 (JP)
(72) Inventor: Saeki, Mitsuo, c/o Fujitsu Limited, Kawasaki-shi, Kanagawa 211-8588 (JP); Matsuda, Kouichi, c/o Fujitsu Limited, Kawasaki-shi, Kanagawa 211-8588 (JP)
(74) Representative: Wilding, Frances Ward

(57) **Abstract**

To improve conversion efficiency at a DC-DC conversion time by providing driving units respectively for a plurality of switches and controlling the switches corresponding to a load current, an input voltage (10a), an output voltage (10b) and an input/output voltage difference. When synchronously rectifying a plurality of first switches (11a, 11b) and a plurality of second switches (12a, 12b) by setting the first switches and the second switches alternately in an ON-state, the plurality of first switches are driven repeatedly in the ON- or OFF-state corresponding to a required output, the plurality of second switches (11a, 11b) are driven in the ON- or OFF-state in synchronization with the first switches, the driving of part of the plurality of first switches and part or all of the plurality of second switches is stopped corresponding to a load current, an output voltage, an input voltage or an input/output voltage difference.

## Description

### BACKGROUND OF THE INVENTION

The invention relates to a synchronous rectification type DC-DC converter and to a control circuit for the DC-DC converter.

A synchronous rectification type DC-DC converter has hitherto been employed for a variety of electronic devices. The synchronous rectification type DC-DC converter has a function of reducing DC power obtained through conversion by, e.g., an AC adapter from a commercial power source, DC power obtained from a battery and so on down to a voltage suited to an operation of an internal circuit. This synchronous rectification type DC-DC converter has an advantage that efficiency is high while a loss is small.

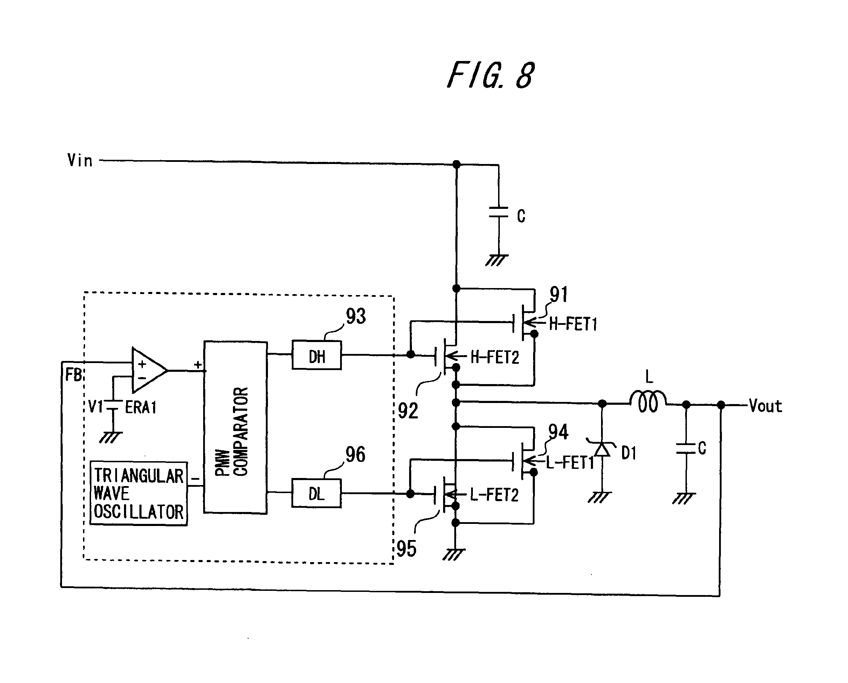

A conceivable configuration of the DC-DC converter is that in the case of requiring a large load current, for example, as shown in FIG. 8, a plurality of output control FETs 91, 92 are provided and driven by a driver circuit 93, and a plurality of synchronous rectification FETs 94, 95 are provided and driven by a driver circuit 96.

Further, a known configuration is that a multiplicity of driver circuits (circuits of controlling the FETs) are prepared to selectively operate the FETs, thus giving flexibility to fluctuations in load. It is, for instance, a DC-DC converter (ADP3205 (Analog Devices IC) etc.) flexible to multiphase.

This type of flexible-to-multiphase DC-DC converter includes the FET and a coil for every phase. Namely, this DC-DC converter includes n-pieces of output control FETs, n-pieces of synchronous rectification FETs and n-pieces of coils for n-phases.

In this system, if the load current is small, a circuit efficiency is improved by stopping the driver for driving the phase on a phase-by-phase basis.
Further, the prior arts related to the invention of the application are the following technologies disclosed in Patent documents 1 and 2.
[Patent document 1] Japanese Patent Application Laid-Open Publication No.2003-284333
[Patent document 2] Japanese Patent Application Laid-Open Publication No.2003-319649

### SUMMARY OF THE INVENTION

As described above, in the DC-DC converter provided with the driver for every phase, if the drivers are stopped, all of the plurality of FETs driven by the drivers can not be used, and hence only rough control is performed, wherein optimum conversion efficiency is not necessarily acquired depending on the load and a state of input/output voltages.

Such being the case, the invention provides a technology for improving the conversion efficiency at a DC-DC conversion time byprovidingdrivingunits forapluralityof switches and controlling the respective switches in accordance with a load current, an input voltage, an output voltage and an input/output voltage.

For solving the problems, the invention adopts the following configurations.
Namely, a control circuit of the invention is a control circuit of a DC-DC converter for synchronously rectifying a first switch and a second switch by setting the first switch and the second switch alternately in an ON-state, the control circuit including a plurality of first driving units for repeatedly driving the plurality of first switches in an ON- or OFF-state in accordance with a required output, a plurality of second driving units for driving the plurality of second switches in the ON- or OFF-state in synchronization with the first switches, and a selection unit for stopping part of the plurality of first driving units and part or all of the plurality of second driving units in accordance with a predetermined information (a load current value, an output voltage value, an input voltage value or an input/output voltage difference value).

Moreover, a DC-DC converter of the invention includes a plurality of first switches, a plurality of second switches, a plurality of first driving units for repeatedly driving the plurality of first switches in an ON- or OFF-state in accordance with a required output, a plurality of second driving units for driving respectively the plurality of second switches in the ON-state in synchronization with the first switches, a detection unit for detecting a predetermined information (a load current value, an output voltage value, an input voltage value or an input/output voltage difference value), and a selection unit for stopping part of the plurality of first driving units and part or all of the plurality of second driving units in accordance with the information detected by the detection unit.

According to the invention, it is possible to improve the conversion efficiency at the DC-DC conversion time by providing the driving units respectively for the plurality of switches and controlling the respective switches in accordance with the load current, the input voltage, the output voltage and the input/output voltage difference.

### BRIEF DESCRIPTION OF THE DRAWINGS

FIG.1 is a diagram of an outline of a first embodiment of the invention.
FIG.2 is a diagram showing ON/OFF time changes of an output control FET and a synchronous rectification FET.
FIG.3 is a diagram showing the ON/OFF time changes of the output control FET and the synchronous rectification FET when an input/output voltage difference is large.
FIG. 4 is a diagram showing the ON/OFF time changes of the output control FET and the synchronous rectification FET when the input/output voltage difference is small.
FIG.5 is a diagram of an outline of a second embodiment of the invention.
FIG.6 is a perspective view of an external configuration of a notebook PC as an electronic device of the invention.
FIG.7 is an explanatory diagram of a periphery to a power source unit of the electronic device.
FIG. 8 is a diagram of an outline of a DC-DC converter of a related technology.

### DETAILED DESCRIPTION OF THE PREFERRED EMBODIMENT

Abest mode for carrying out the invention will hereinafter be described with reference to the drawings. Configurations of the following embodiments are exemplifications, and the invention is not limited to the configurations of the embodiments.

### <First Embodiment>

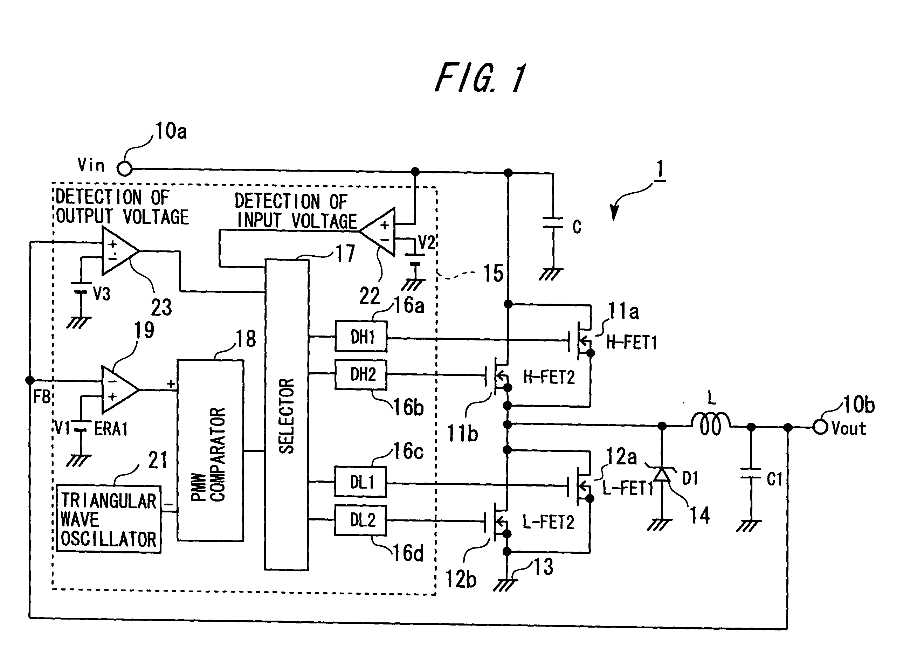

FIG. 1 is a diagram of an outline of a synchronous rectification type DC-DC converter according to the invention.
FETs (Field-Effect Transistors) 11a, 11b defined as first switches are provided in parallel between an input terminal 10a and an output terminal 10b of this DC-DC converter 1, and an inductor L is disposed on the side of the output terminal 10b. Further, FETs 12a, 12b as second switches are provided in parallel between this inductor L and an earthed point 13. Herein, the first and second switches involve using the FETs and may also be other types of switching elements without being limited to the FETs.

The FETs 11a, 11b as the first switches might be referred to as output control switches, output control FETs, main switches, main-side FETs, high-side switches, high-side FETs, and so on.

The FETs 12a, 12b as the second switches might be referred to as synchronous rectification switches, synchronous rectification FETs, synchronous-rectification-side FETs, low-side switches, low-side FETs, and so forth.

Moreover, a diode 14a is disposed in parallel with the synchronous rectification FETs 12a, 12b.
Then, this DC-DC converter 1 is provided with a control circuit 15 for controlling the output control FETs 11a, 11b and the synchronous rectification FETs 12a, 12b so as to set these FETs in an ON-state, alternately.

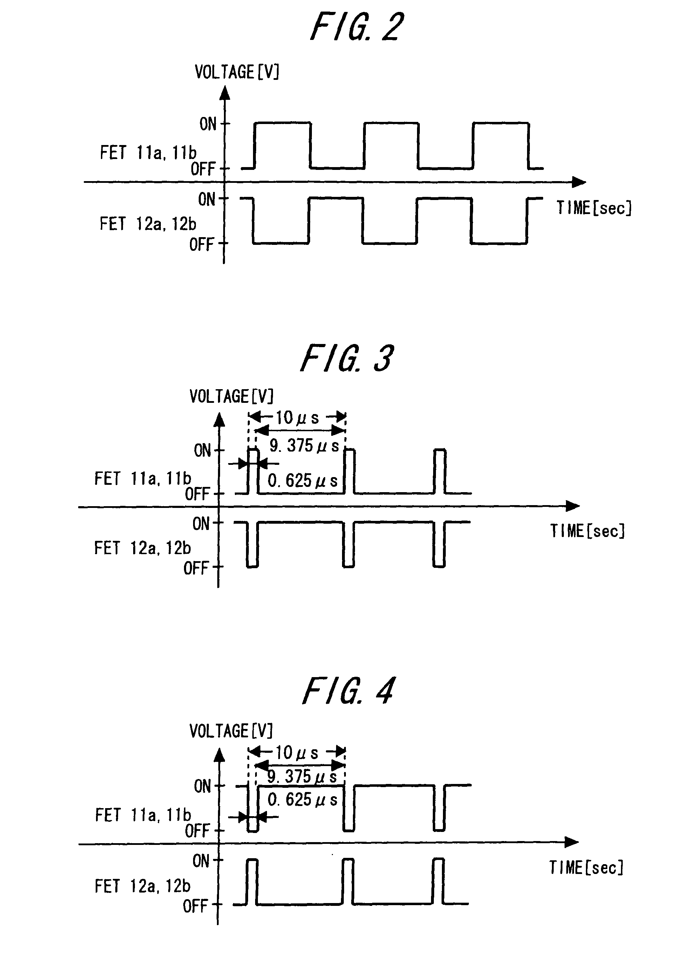

FIG. 2 is a diagram showing ON/OFF time changes of the output control FETs 11a, 11b and the synchronous rectification FETs 12a, 12b.

Thus, an electric current from the input terminal 10a is kept flowing during only a period of the ON-state of the output control FETs 11a, 11b, then smoothed by the inductor L and a capacitor C and thus outputted, whereby an input voltage is converted into an output voltage corresponding to a duty ratio of the output control FETs 11a, 11b.

The control circuit 15 includes drivers 16a - 16d for respectively driving the output control FETs 11a, 11b and the synchronous rectification FETs 12a, 12b, a selector 17 for selectively stopping the drivers 16a - 16d, and a PWM comparator 18 for supplying pulse signals to the respective drivers 16a - 16d via the selector 17.
An input from a differential amplifier 19 and a signal from a triangular wave oscillator 21 are inputted to the PWM comparator 18.

The differential amplifier 19 receives an input of a reference voltage V1 and an input of an output voltage from the output terminal 10b, and inputs an error signal representing a deviation of the output voltage from the reference voltage V1 to the PWM comparator 18. On the other hand, the triangular wave oscillator 21 generates and inputs a triangular wave having a predetermined frequency to the PWM comparator 18.

With this operation, the PWM comparator 18 outputs, to the selector 17, the pulse signal having a pulse width based on the error signal given from the differential amplifier 19 at a timing of the triangular wave inputted from the triangular wave oscillator 21. Herein, the PWM comparator 18 in this example, based on the error signal, outputs the pulse signal having a wider pulse width as the output voltage gets lower than the reference voltage V1, and generates the pulse signal having a narrower pulse width as the output voltage gets higher than the reference voltage V1. Then, the selector 17 inputs the pulse signals to the drivers 16a, 16b (a first driving unit), and sets ON/OFF the output control FETs 11a, 11b as shown in FIG. 2. Simultaneously, the selector 17 substantially inverts and thus inputs the pulse signals given from the PWM comparator 18 to the drivers (a second driving unit) 16c, 16d, and sets ON/OFF the synchronous rectification FETs 12a, 12b as shown in FIG. 2. Accordingly, the duty ratios of the output control FETs 11a, 11b and the synchronous rectification FETs 12a, 12b are adjusted corresponding to the output voltage, and the output voltage is feedback-controlled so as to become a predetermined voltage value. Herein, the drivers 16a - 16d, without being limited to the control at a timing when the ON/OFF settings of the output control FETs 11a, 11b and the synchronous rectification FETs 12a, 12b are strictly inverted, may have a period when setting both types of FETs OFF simultaneously in a way that takes account of a through-current.

Further, the control circuit 15 includes a differential amplifier (input voltage detection unit) 22 for detecting the input voltage, and a differential amplifier (output voltage detection unit) 23 for detecting the output voltage. The differential amplifier 22 inputs an error signal representing a deviation of the input voltage from a reference voltage V2 to the selector 17, and the differential amplifier 23 inputs an error signal representing a deviation of the output voltage from a reference voltage V3 to the selector 17. Thus, a difference (I/O voltage difference) between the input voltage and the output voltage is obtained by detecting the input voltage and the output voltage. Namely, in the first embodiment, the differential amplifiers 22 and 23 correspond to a voltage difference detection unit.

Then, the selector 17 selectively stops the drivers 16a - 16d on the basis of the difference (I/O voltage difference) between the input voltage and the output voltage. Namely, the selector 17 does not input the pulse signal to the driver to be stopped so that the FET is not charged with a gate voltage.

For instance, when the frequency of the pulse signal outputted from the triangular wave oscillator 21 is 100 kHz, the input voltage is 16 V and the output voltage is 1V, the ON/OFF time of the output control FETs 11a, 11b and of the synchronous rectification FETs 12a, 12b becomes as shown in FIG. 3.
Similarly, when the input voltage is 16V and the output voltage is 15V, the ON/OFF time of the output control FETs 11a, 11b and of the synchronous rectification FETs 12a, 12b becomes as shown in FIG. 4.

As shown in FIG. 3, if there is a large I/O voltage difference (15 V), the ON-time of the output control FETs 11a, 11b is as short as 0.625 µs, and a product of the electric power applied to the output control FETs 11a, 11b is small. Further, as shown in FIG. 4, if the I/O voltage difference is small (1 V), the ON-time of the output control FETs 11a, 11b is as long as 9.375 µs, and the product of the electric power applied to the output control FETs 11a, 11b is large. Therefore, if the DC-DC converter is a converter capable of converting the output voltage into 1 V trough 15 V when the input voltage is 16 V, the output control FETs 11a, 11b are so designed as to withstand the minimum I/O voltage difference (1 V). Hence, as shown in FIG. 3, if the I/O voltage difference increases and falls within an allowable range of one output control FET, switching can be done by only the other even when stopping one of the output control FETs 11a, 11b.

For example, when stopping the output control FET 11a, a drain current of the output FET 11b comes to 10A, and, if the output control FET 11b withstands the drain current of 10 A for 2 µs, it can be said that the output control FET 11b is capable of switching with the I/O voltage difference that is on the order of 10 V. Such being the case, the selector 17 is set so as to stop the driver 16a for the output control FET 11a if the I/O voltage difference is equal to or larger than 10 V and to drive the drivers 16a, 16b for both of the output control FETs 11a and 11b if the I/O voltage difference is less than 10 V. Note that these numerical values can be arbitrarily set depending on the FETs to be used, a load, and so on. Further, the example has exemplified the case of stopping one of the two output control FETs 11a, 11b, and may also adopt such a configuration that a larger number of output control FETs are provided, part of these FETs are stopped, and the remaining FETs conduct switching.

Thus, the minimum number of elements necessary for switching is determined by the ON-time of the output control FET, and hence, in the first embodiment, the selector 17 sets so that the pulse signals are selectively supplied to the drivers of which the number corresponds to the I/O voltage difference inputted by the differential amplifiers 22, 23. Namely, the selector 17 stops the driver for the output control FETs exceeding the necessary number of FET. Note that a method of determining specifically which driver should be stopped corresponding to the necessary number of FETs can be arbitrarily set.

On the other hand, as shown in FIG. 3, if the I/O voltage difference is large (15 V), the ON-time of the synchronous rectification FETs 12a, 12b is as long as 9.375 µs, and a product of electric power applied to the synchronous rectification FETs 12a, 12b is large. Further, as shown in FIG. 4, if the I/O voltage difference is small (1 V), the ON-time of the synchronous rectification FETs 12a, 12b is as short as 0.625 µs, and the product of the electric power applied to the synchronous rectification FETs 12a, 12b is small. Accordingly, if the DC-DC converter is the converter capable of converting the output voltage into 1 V trough 15 V when the input voltage is 16 V, the synchronous rectification FETs 12a, 12b are so designed as to withstand the maximum I/O voltage difference (15 V). Hence, as shown in FIG. 4, if the I/O voltage difference decreases and falls within an allowable range of one synchronous rectification FET, switching can be done by only the other even when stopping one of the synchronous rectification FETs 12a, 12b.

Moreover, if the electric power applied to the synchronous rectification FETs 12a, 12b is small and if a power loss is small enough to be ignorable when this electric power is applied to the diode 14, all the synchronous rectification FETs 12a, 12b may be stopped.

For example, when stopping the synchronous rectification FET 12a, the drain current of the synchronous rectification FET 12b comes to 10 A, and the synchronous rectification FET 12b, if able to withstand the drain current of 10 A for 2 µs, can be said to be capable of switching with the I/I voltage difference of 3 V. Such being the case, the selector 17 is set so as to stop the drivers 16a, 16d for both of the synchronous rectification FETs 12a, 12b if the I/O voltage difference is less than 1.5 V, to stop the driver 16c for the synchronous rectification FET 12a if the I/O voltage difference is equal to or larger than 1.5 V but is equal to or smaller than 3 V, and to drive the drivers 16c, 16d for both of the synchronous rectification FETs 12a, 12b if the I/O voltage difference exceeds 3 V. Note that these numerical values can be arbitrarily set depending on the FETs to be used, a load, and so on. Further, the example has exemplified the case of stopping one or two of the two synchronous rectification FETs 12a, 12b, and may also adopt such a configuration that a larger number of synchronous rectification FETs are provided, part of these FETs are stopped, and the remaining FETs conduct switching.

Thus, the minimum number of the elements required for switching is determined depending on the ON-time of the synchronous rectification FETs, and hence, in the first embodiment, the selector 17 sets to supply the pulse signals selectively to the drivers of which the number corresponds to the I/O voltage difference inputted by the differential amplifiers 22, 23. Namely, the selector 17 stops the drivers for the synchronous rectification FET exceeding the necessary number of FET. Note that the method of determining specifically which driver should be stopped, can be arbitrarily set.

With this setting, part of the drivers 16a - 16d are stopped when the load is light with the result that the electric power consumed by those drivers can be reduced, thereby attaining the power-saving, i.e., an improvement of the converting efficiency.
For example, there are provided four pieces of driver circuits having power consumption of 25 mW per piece (namely, the power consumption of all the driver circuits is given by 25 mW x 4 = 100 mW), and, when operating these four driver circuits, there must be a 20% loss with respect to a load of load power given by 5 V x 100 mA = 500 mW. Herein, in the case of driving only two driver circuits while stopping part of these driver circuits, an improvement of a 50 mW power loss can be attained. That is, the power loss can be reduced down to 10% from 20% with respect to the load.

As described above, according to the first embodiment, the driver prepared for every FET is stopped or driven corresponding to the state of the I/O voltage difference, thereby enabling the optimum drive control and the improvement of the efficiency of the DC-DC converter.

Note that the first embodiment has adopted the configuration that the selector 17 stops part of the drivers corresponding to the I/Ovoltagedifference andmayalsotake, without being limited to this configuration, such a configuration that the selector 17 stops part of the drivers corresponding to the input voltage or the output voltage.

For instance, if the output voltage takes substantially a fixed value, the minimum number of the FETs required can be determined in the same way as described above from the difference between the output voltage assumed to be this value and the input voltage, and therefore, with the output voltage detection unit (differential amplifier) 23 omitted, the selector 17 may stop the drivers of which the number corresponds to the input voltage of the input voltage detection unit (difference amplifier) 22.

Moreover, for instance, if the input voltage takes substantially a fixed value, the minimum number of the FETs required can be determined in the same way as described above from the difference between the input voltage assumed to be this value and the output voltage, and therefore, with the input voltage detection unit (differential amplifier) 22 omitted, the selector 17 may stop the drivers of which the number corresponds to the output voltage of the output voltage detection unit (difference amplifier) 23.

### <Second Embodiment>

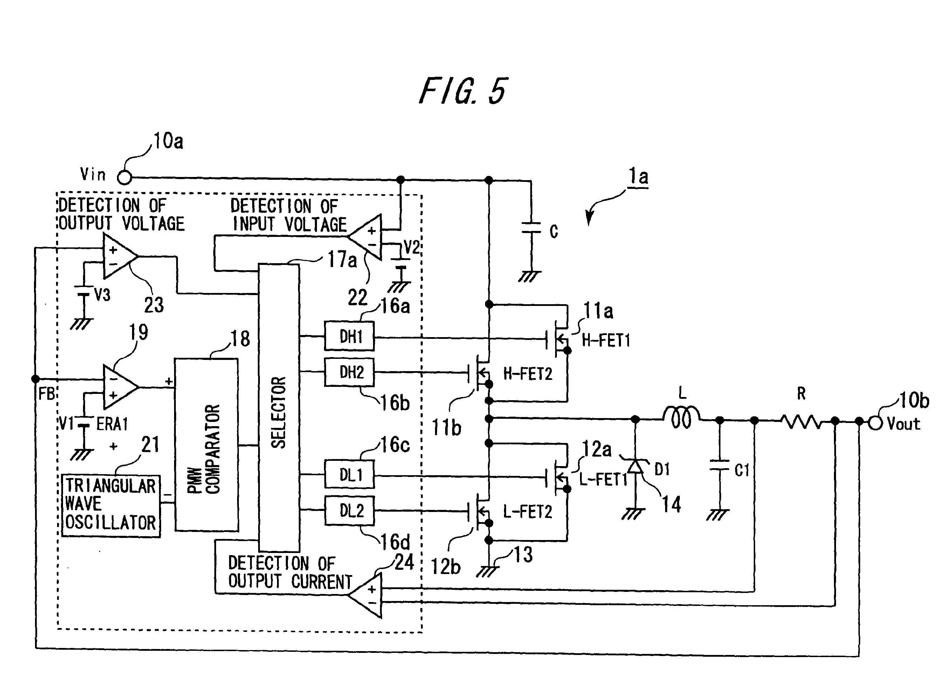

FIG. 5 is a diagram of an outline of a DC-DC converter shown by way of a second embodiment. The second embodiment is different from the first embodiment in terms of a point that the driver to be stopped is determined corresponding to a load current, and other configurations are the same. Therefore, the same components as those in the first embodiment are marked with the same numerals and symbols, and the repetitive explanations are omitted in principle.

As shown in FIG. 5, a DC-DC converter 1a in the second embodiment includes a load current detector 24 that detects a current flowing across a resistor R in the vicinity of an output terminal 10b, i.e., detects the output current (load current), wherein a signal corresponding to this output current is inputted to a selector 17a.

Then, the selector 17a in the second embodiment stops the driver on the basis of this load current and the I/O voltage difference described above.
Namely, a relationship between the I/O voltage difference and the number of the drivers to be stopped is determined by the load current, and hence, in the DC-DC converter 1a according to the second embodiment, the selector 17a is set to stop the driver based on the relationship corresponding to this load current.

For instance, if the load current is 12 A with respect to the drivers 16a, 16b on the output control side, the selector 17a is set to stop the driver 16a for the output control FET 11a when the I/O voltage difference is equal to or larger than 12 V, to drive the drivers 16a, 16b for both of the output control FETs 11a and 11b when the I/O voltage difference is less than 12 V, and is further set to, if the load current is 10 A, stop the driver 16a for the output control FET 11a when the I/O voltage difference is equal to or larger than 10 V and to drive the drivers 16a, 16b for both of the output control FETs 11a and 11b when the I/O voltage difference is less than 10 V.

Then, if the load current is 12 A with respect to the drivers 16c, 16d on the synchronous rectification side, the selector 17 is set to stop the drivers 16c, 16d for both of the synchronous rectification FETs 12a, 12b when the I/O voltage difference is less than 1.1V, to stop the driver 16c for the synchronous rectification FET 12a when the I/O voltage difference is equal to larger than 1.1 V but is equal to or smaller than 2 V, and to drive the drivers 16c, 16d for both of synchronous rectification FETs 12a, 12b when the I/O voltage difference exceeds 2 V, and is further set to, if the load current is 10 A, stop the drivers 16c, 16d for both of the synchronous rectification FETs 12a, 12b when the I/O voltage difference is less than 1.5 V, to stop the driver 16c for the synchronous rectification FET 12a when the I/O voltage difference is equal to larger than 1.5 V but is equal to or smaller than 3 V, and to drive the drivers 16c, 16d for both of synchronous rectification FETs 12a, 12b when the I/O voltage difference exceeds 3 V. Note that these numerical values can be arbitrarily set depending on the FETs to be used, a load, and so on. Further, the example has exemplified the case of stopping one of the two output control FETs 11a, 11b, and the case of stopping one or two of the two synchronous rectification FETs 12a, 12b, and may also adopt such a configuration that a larger number of FETs are provided, part of these FETs are stopped, and the remaining FETs conduct switching.

Moreover, the second embodiment has adopted the configuration that the selector 17 stops part of the drivers corresponding to the I/O voltage difference and the load current and may also take, without being limited to this configuration, such a configuration that the selector 17 stops part of the drivers corresponding to the input voltage/the load current, the output voltage/load current, or only the load current.

For instance, if the output voltage takes substantially a fixed value, the minimum number of the FETs required can be determined in the same way as described above from the difference between the output voltage assumed to be this value and the input voltage and from the load current, so that the selector 17, with the output voltage detection unit (differential amplifier) 23 omitted, may stop the drivers of which the number corresponds to the input voltage detected by the input voltage detection unit (differential amplifier) 22 and the load current detected by the load current detection unit 24.

Further, if the input voltage takes substantially a fixed value, the minimum number of the FETs required can be determined in the same way as described above from the difference between the input voltage assumed to be this value and the output voltage and from the load current, so that the selector 17, with the input voltage detection unit (differential amplifier) 22 omitted, may stop the drivers of which the number corresponds to the output voltage detected by the output voltage detection unit (differential amplifier) 23 and the load current detected by the load current detection unit 24.

Moreover, if the I/O voltage difference takes substantially a fixed value, the minimum number of the FETs required can be determined in the same way as described above from the I/O voltage difference assumed to be this value and from the load current, so that the selector 17, with the input voltage detection unit (differential amplifier) 22 and the output voltage detection unit (differential amplifier) 23 omitted, may stop the drivers of which the number corresponds to the load current detected by the load current detection unit 24.

### <Third Embodiment>

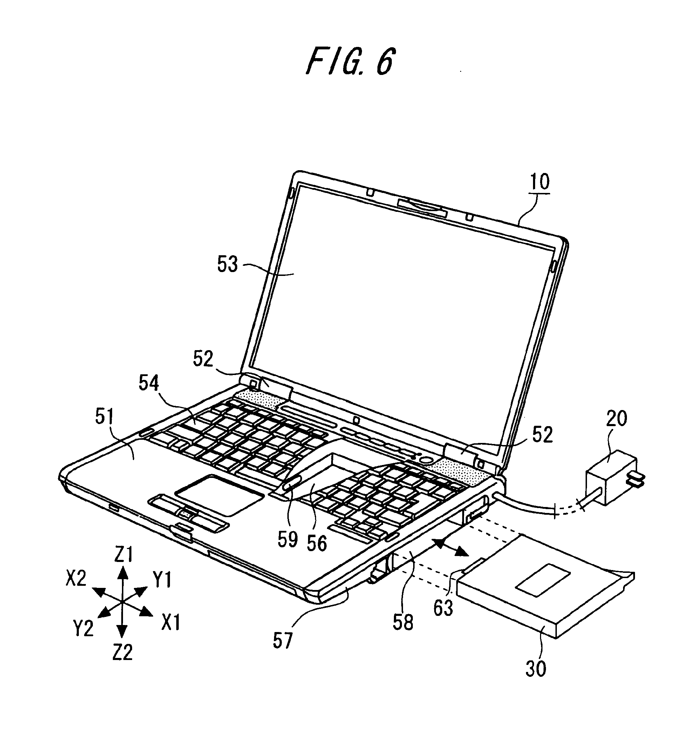

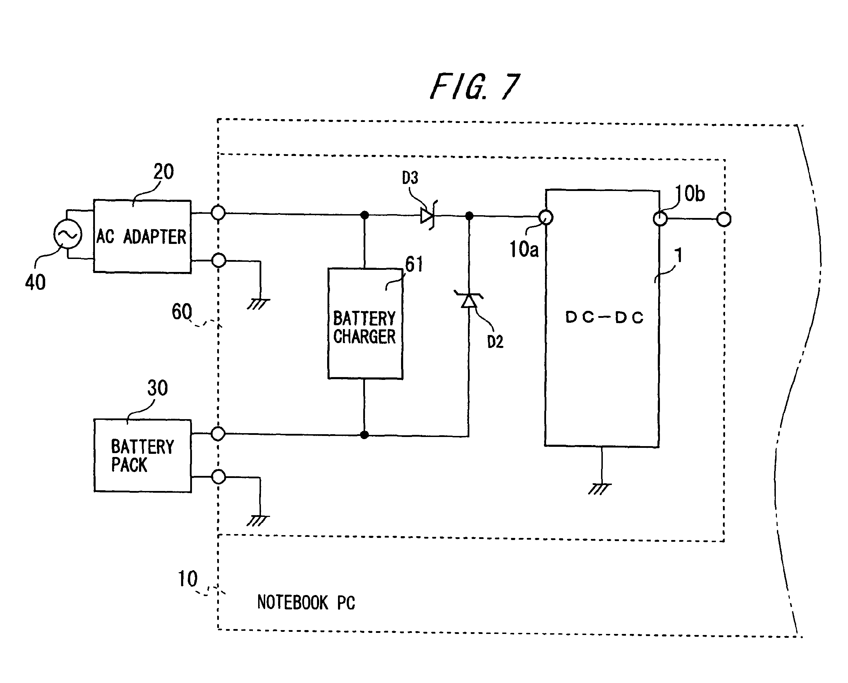

FIG. 6 is a perspective view of an external configuration of a notebook type personal computer (which corresponds to an electronic device and will hereinafter be also called a notebook PC) as an electronic device of the invention. FIG. 7 is an explanatory diagram showing a periphery to a power source unit of the notebook PC. The third embodiment exemplifies an example of a notebook PC 10 including the power source unit provided with the same DC-DC converter 1 as the first embodiment has. Note that the same components as those in the first embodiment are marked with the same numerals and symbols, and the repetitive explanations are omitted.

In FIG. 6, the notebook PC 10 is constructed of a computer body 51 and a display unit 53 so connected to the computer body 51 as to be openable and closable through hinges 52. Arrowheads X1, X2 indicate a widthwise direction of the notebook PC 10, arrowheads Y1, Y2 indicate a depthwise direction, and arrowheads Z1, Z2 indicate a heightwise (thicknesswise) direction. The computer body 51 having a keyboard unit 54 on a top face includes a CPU etc. inside, and an accommodation unit 56 for the battery pack 30 is formed on the right side of a lower portion thereof. The accommodation unit 56 has an aperture 58 serving as an insert port of the battery pack 30 is formed in a right-side surface 57 of the computer body 51. The accommodation unit 56 is formed in a slit-like shape extending from this aperture 58 to the vicinity of the middle of the device in the direction of the arrowhead X2, and a connector 59 is provided at an X2-side end portion. Note that the connector 59 is disposed inwardly of the computer body 51, and hence the body 51 is illustrated in a way that cuts off part of the upper surface thereof in FIG. 6.

The battery pack 30 has a connector 63 taking a flat shape fittable in the accommodation unit 56 and fitted to the connector 59 at a front end portion in the insert direction (X2) . The battery pack 30 is electrically connected to the power source unit 60 via these connectors 59, 63 when fitted in the accommodation unit 56.

Further, the notebook PC 10, to which an AC adapter 20 is connected, is supplied with DC power into which the AC adapter 20 converts commercial AC power.

The AC adapter 20 has a function of converting the electric power of a commercial power source 40 into the DC power of, e.g., 16 V, and supplying the DC power to the power source unit 60 of the notebook PC 10. The power supplied to this power source unit 60 is transferred to an input terminal 10a of the DC-DC converter via a diode D3, and the DC-DC converter 1 converts this power into power having a voltage employed in circuits (load) of the respective units within the notebook PC 10. Note that FIG. 7 illustrates only one output terminal 10b from the DC-DC converter 1, however, the output terminal is not limited to one. For instance, a configuration is that the output terminals may be provided for a plurality of lines, and voltages different from each other may be outputted therefrom.

Moreover, the power from the AC adapter 20 is supplied also to the battery pack 30 via a batter charger 61. The battery pack 30 accommodates an unillustrated secondary battery, and the battery charger 61 charges the secondary battery in the batter pack 30 with the electric power given from the AC adapter 20. Then, in the notebook PC 10, even in a state where the AC adapter 20 is removed, the power (that is on the order of, e.g., 12.6 V) from the batter pack 30 is transferred via the diode D2, further converted into the power having a predetermined voltage by the DC-DC converter 1 and thus supplied to the circuits (load) of the respective units.

This DC-DC converter 1, which is the same as in the first embodiment discussed above, stops or drives the driver circuit prepared for every FET corresponding to a state of the I/O voltage difference, thereby enabling the optimum drive control.

Hence, according to the third embodiment, the power consumption efficiency of the notebook PC (the electronic device) can be improved.

Note that the DC-DC converter 1 in the third embodiment may be replaced with the same DC-DC converter 1a as in the second embodiment discussed above. Moreover, the third embodiment adopts the configuration that the selector 17 stops part of the drivers in accordance with the I/O voltage difference and may, without being limited to this configuration, take such a configuration that the selector 17 stops part of the drivers in accordance with the input voltage or the output voltage.

For example, if the output voltage takes substantially a fixed value, the minimum number of the FETs required can be determined in the same way as described above from the difference between the output voltage assumed to be this value and the input voltage, and therefore, with the output voltage detection unit (differential amplifier) 23 omitted, the selector 17 may stop the drivers of which the number corresponds to the input voltage of the input voltage detection unit (difference amplifier) 22.

Moreover, for instance, if the input voltage takes substantially a fixed value, the minimum number of the FETs required can be determined in the same way as described above from the difference between the input voltage assumed to be this value and the output voltage, and therefore, with the input voltage detection unit (differential amplifier) 22 omitted, the selector 17 may stop the drivers of which the number corresponds to the output voltage of the output voltage detection unit (difference amplifier) 23.

### <Others>

The invention is not limited to only the illustrated examples given above and can be, as a matter of course, changed in a variety of forms in the range that does not deviate from the gist of the invention.
For example, even the configurations given in the following Notes can acquired the same effects as those in the embodiments discussed above. Further, the components thereof can be combined to the greatest possible degree.

### (Note1)

A control circuit of a DC-DC converter executing a rectification by setting the first switch and the second switch alternately in an ON-state, comprising:
a plurality of first driving units driving respectively the plurality of first switches;
a second driving unit driving the second switch; and
a selection unit stopping part of the plurality of first driving units in accordance with a load current.

### (Note2)

A control circuit of a DC-DC converter executing a rectification by setting the first switch and the second switch alternately in an ON-state, comprising:
a first driving unit driving the first switch;
a plurality of second driving units driving respectively the plurality of second switches; and
a selection unit stopping part or all of the plurality of second driving units in accordance with a load current.

### (Note3)

A control circuit of a DC-DC converter executing a rectification by setting the first switch and the second switch alternately in an ON-state, comprising:
a plurality of first driving units driving respectively the plurality of first switches;
a second driving unit driving the second switch; and
a selection unit stopping part of the plurality of first driving units in accordance with an input voltage.

### (Note4)

A control circuit of a DC-DC converter executing a rectification by setting the first switch and the second switch alternately in an ON-state, comprising:
a first driving unit driving the first switch;
a plurality of second driving units driving respectively the plurality of second switches; and
a selection unit stopping part or all of the plurality of second driving units in accordance with an input voltage.

### (Note5)

A control circuit of a DC-DC converter executing a rectification by setting the first switch and the second switch alternately in an ON-state, comprising:
a plurality of first driving units driving respectively the plurality of first switches;
a second driving unit driving the second switch; and
a selection unit stopping part of the plurality of first driving units in accordance with an output voltage.

### (Note6)

A control circuit of a DC-DC converter executing a rectification by setting the first switch and the second switch alternately in an ON-state, comprising:
a first driving unit driving the first switch;
a plurality of second driving units driving respectively the plurality of second switches; and
a selection unit stopping part or all of the plurality of second driving units in accordance with an output voltage.

### (Note7)

A control circuit of a DC-DC converter executing a rectification by setting the first switch and the second switch alternately in an ON-state, comprising:
a plurality of first driving units driving respectively the plurality of first switches;
a second driving unit driving the second switch; and
a selection unit stopping part of the plurality of first driving units in accordance with an input/output voltage difference.

### (Note8)

A control circuit of a DC-DC converter executing a rectification by setting the first switch and the second switch alternately in an ON-state, comprising:
a first driving unit driving the first switch;
a plurality of second driving units driving respectively the plurality of second switches; and
a selection unit stopping part or all of the plurality of second driving units in accordance with an input/output voltage difference.

### (Note9)

A control circuit of a DC-DC converter executing a rectification by setting the first switch and the second switch alternately in an ON-state, comprising:
a plurality of first driving units driving respectively the plurality of first switches;
a plurality of second driving units driving respectively the plurality of second switches; and
a selection unit stopping part of the plurality of first driving units, and part or all of the plurality of second driving units in accordance with a load current.

### (Note10)

A control circuit of a DC-DC converter executing a rectification by setting the first switch and the second switch alternately in an ON-state, comprising:
a plurality of first driving units driving respectively the plurality of first switches;
a plurality of second driving units driving respectively the plurality of second switches; and
a selection unit stopping part of the plurality of first driving units, and part or all of the plurality of second driving units in accordance with an input voltage.

### (Note11)

A control circuit of a DC-DC converter executing a rectification by setting the first switch and the second switch alternately in an ON-state, comprising:
a plurality of first driving units driving respectively the plurality of first switches;
a plurality of second driving units driving respectively the plurality of second switches; and
a selection unit stopping part of the plurality of first driving units, and part or all of the plurality of second driving units in accordance with an output voltage.

### (Note12)

A control circuit of a DC-DC converter executing a rectification by setting the first switch and the second switch alternately in an ON-state, comprising:
a plurality of first driving units driving respectively the plurality of first switches;
a plurality of second driving units driving respectively the plurality of second switches; and
a selection unit stopping part of the plurality of first driving units, and part or all of the plurality of second driving units in accordance with an input/output voltage difference.

### (Note13)

A DC-DC converter comprising:
a plurality of first switches;
a second switch;
a plurality of first driving units driving respectively the plurality of first switches;
a second driving unit driving the second switch;
a load current detection unit detecting a load current; and
a selection unit stopping part of the plurality of first driving units in accordance with the load current detected by the load current detection unit.

### (Note14)

A DC-DC converter comprising:
a first switch;
a plurality of second switches;
a first driving unit driving the first switch;
a plurality of second driving units driving respectively the plurality of second switches;
a load current detection unit detecting a load current; and
a selection unit stopping part or all of the plurality of second driving units in accordance with the load current detected by the load current detection unit.

### (Note15)

A DC-DC converter comprising:
a plurality of first switches;
a second switch;
a plurality of first driving units driving respectively the plurality of first switches;
a second driving unit driving the second switch;
an input voltage detection unit detecting an input voltage; and
a selection unit stopping part of the plurality of first driving units in accordance with the input voltage detected by the input voltage detection unit.

### (Note16)

A DC-DC converter comprising:
a first switch;
a plurality of second switches;
a first driving unit driving the first switch;
a plurality of second driving units driving respectively the plurality of second switches;
an input voltage detection unit detecting an input voltage; and
a selection unit stopping part or all of the plurality of second driving units in accordance with the input voltage detected by the input voltage detection unit.

### (Note17)

A DC-DC converter comprising:
a plurality of first switches;
a second switch;
a plurality of first driving units driving respectively the plurality of first switches;
a second driving unit driving the second switch;
an output voltage detection unit detecting an output voltage; and
a selection unit stopping part of the plurality of first driving units in accordance with the output voltage detected by the output voltage detection unit.

### (Note18)

A DC-DC converter comprising:
a first switch;
a plurality of second switches;
a first driving unit driving the first switch;
a plurality of second driving units driving respectively the plurality of second switches;
an output voltage detection unit detecting an output voltage; and
a selection unit stopping part or all of the plurality of second driving units in accordance with the output voltage detected by the output voltage detection unit.

### (Note19)

A DC-DC converter comprising:
a plurality of first switches;
a second switch;
a plurality of first driving units driving respectively the plurality of first switches;
a second driving unit driving the second switch;
a voltage difference detection unit detecting an input/output voltage difference; and
a selection unit stopping part of the plurality of first driving units in accordance with the input/output voltage difference detected by the voltage difference detection unit.

### (Note20)

A DC-DC converter comprising:
a first switch;
a plurality of second switches;
a first driving unit driving the first switch;
a plurality of second driving units driving respectively the plurality of second switches;
a voltage difference detection unit detecting an input/output voltage difference; and
a selection unit stopping part or all of the plurality of second driving units in accordance with the input/output voltage difference detected by the voltage difference detection unit.

### (Note21)

A DC-DC converter comprising:
a plurality of first switches;
a plurality of second switches;
a plurality of first driving units driving respectively the plurality of first switches;
a plurality of second driving units driving respectively the plurality of second switches;
a load current detection unit detecting a load current; and
a selection unit stopping part of the plurality of first driving units and stopping part or all of the plurality of second driving units in accordance with the load current detected by the load current detection unit.

### (Note22)

A DC-DC converter comprising:
a plurality of first switches;
a plurality of second switches;
a plurality of first driving units driving respectively the plurality of first switches;
a plurality of second driving units driving respectively the plurality of second switches;
an input voltage detection unit detecting an input voltage; and
a selection unit stopping part of the plurality of first driving units and stopping part or all of the plurality of second driving units in accordance with the input voltage detected by the input voltage detection unit.

### (Note23)

A DC-DC converter comprising:
a plurality of first switches;
a plurality of second switches;
a plurality of first driving units driving respectively the plurality of first switches;
a plurality of second driving units driving respectively the plurality of second switches;
an output voltage detection unit detecting an output voltage; and
a selection unit stopping part of the plurality of first driving units and stopping part or all of the plurality of second driving units in accordance with the output voltage detected by the output voltage detection unit.

### (Note24)

A DC-DC converter comprising:
a plurality of first switches;
a plurality of second switches;
a plurality of first driving units driving respectively the plurality of first switches;
a plurality of second driving units driving respectively the plurality of second switches;
a voltage difference detection unit detecting an input/output voltage difference; and
a selection unit stopping part of the plurality of first driving units and stopping part or all of the plurality of second driving units in accordance with the input/output voltage difference detected by the voltage difference detection unit.

### (Note25)

An electronic device including a DC-DC converter and a load operated by an output from the DC-DC converter,
the DC-DC converter comprising:
a plurality of first switches;
a second switch;
a plurality of first driving units driving respectively the plurality of first switches;
a second driving unit driving the second switch;
a load current detection unit detecting a load current; and
a selection unit stopping part of the plurality of first driving units in accordance with the load current detected by the load current detection unit.

### (Note26)

An electronic device including a DC-DC converter and a load operated by an output from the DC-DC converter,
the DC-DC converter comprising:
a first switch;
a plurality of second switches;
a first driving unit driving the first switch;
a plurality of second driving units driving respectively the plurality of second switches;
a load current detection unit detecting a load current; and
a selection unit stopping part or all of the plurality of second driving units in accordance with the load current detected by the load current detection unit.

### (Note27)

An electronic device including a DC-DC converter and a load operated by an output from the DC-DC converter,
the DC-DC converter comprising:
a plurality of first switches;
a second switch;
a plurality of first driving units driving respectively the plurality of first switches;
a second driving unit driving the second switch;
an input voltage detection unit detecting an input voltage; and
a selection unit stopping part of the plurality of first driving units in accordance with the input voltage detected by the input voltage detection unit.

### (Note28)

An electronic device including a DC-DC converter and a load operated by an output from the DC-DC converter,
the DC-DC converter comprising:
a first switch;
a plurality of second switches;
a first driving unit driving the first switch;
a plurality of second driving units driving respectively the plurality of second switches;
an input voltage detection unit detecting an input voltage; and
a selection unit stopping part or all of the plurality of second driving units in accordance with the input voltage detected by the input voltage detection unit.

### (Note29)

An electronic device including a DC-DC converter and a load operated by an output from the DC-DC converter,
the DC-DC converter comprising:
a plurality of first switches;
a second switch;
a plurality of first driving units driving respectively the plurality of first switches;
a second driving unit driving the second switch;
an output voltage detection unit detecting an output voltage; and
a selection unit stopping part of the plurality of first driving units in accordance with the output voltage detected by the output voltage detection unit.

### (Note30)

An electronic device including a DC-DC converter and a load operated by an output from the DC-DC converter,
the DC-DC converter comprising:
a first switch;
a plurality of second switches;
a first driving unit driving the first switch;
a plurality of second driving units driving respectively the plurality of second switches;
an output voltage detection unit detecting an output voltage; and
a selection unit stopping part or all of the plurality of second driving units in accordance with the output voltage detected by the output voltage detection unit.

### (Note31)

An electronic device including a DC-DC converter and a load operated by an output from the DC-DC converter,
the DC-DC converter comprising:
a plurality of first switches;
a second switch;
a plurality of first driving units driving respectively the plurality of first switches;
a second driving unit driving the second switch;
a voltage difference detection unit detecting an input/output voltage difference; and
a selection unit stopping part of the plurality of first driving units in accordance with the input/output voltage difference detected by the voltage difference detection unit.

### (Note32)

An electronic device including a DC-DC converter and a load operated by an output from the DC-DC converter,
the DC-DC converter comprising:
a first switch;
a plurality of second switches;
a first driving unit driving the first switch;
a plurality of second driving units driving respectively the plurality of second switches;
a voltage difference detection unit detecting an input/output voltage difference; and
a selection unit stopping part or all of the plurality of second driving units in accordance with the input/output voltage difference detected by the voltage difference detection unit.

### (Note33)

An electronic device including a DC-DC converter and a load operated by an output from the DC-DC converter,
the DC-DC converter comprising:
a plurality of first switches;
a plurality of second switches;
a plurality of first driving units driving respectively the plurality of first switches;
a plurality of second driving units driving respectively the plurality of second switches;
   a load current detection unit detecting a load current; and
a selection unit stopping part of the plurality of first driving units and stopping part or all of the plurality of second driving units in accordance with the load current detected by the load current detection unit.

### (Note34)

An electronic device including a DC-DC converter and a load operated by an output from the DC-DC converter,
the DC-DC converter comprising:
a plurality of first switches;
a plurality of second switches;
a plurality of first driving units driving respectively the plurality of first switches;
a plurality of second driving units driving respectively the plurality of second switches;
an input voltage detection unit detecting an input voltage; and
a selection unit stopping part of the plurality of first driving units and stopping part or all of the plurality of second driving units in accordance with the input voltage detected by the input voltage detection unit.

### (Note35)

An electronic device including a DC-DC converter and a load operated by an output from the DC-DC converter,
the DC-DC converter comprising:
a plurality of first switches;
a plurality of second switches;
a plurality of first driving units driving respectively the plurality of first switches;
a plurality of second driving units driving respectively the plurality of second switches;
an output voltage detection unit detecting an output voltage; and
a selection unit stopping part of the plurality of first driving units and stopping part or all of the plurality of second driving units in accordance with the output voltage detected by the output voltage detection unit.

### (Note36)

An electronic device including a DC-DC converter and a load operated by an output from the DC-DC converter,
the DC-DC converter comprising:
a plurality of first switches;
a plurality of second switches;
a plurality of first driving units driving respectively the plurality of first switches;
a plurality of second driving units driving respectively the plurality of second switches;
a voltage difference detection unit detecting an input/output voltage difference; and
a selection unit stopping part of the plurality of first driving units and stopping part or all of the plurality of second driving units in accordance with the input/output voltage difference detected by the voltage difference detection unit.

### [Industrial Applicability]

The invention can be applied to all types of electronic devices such as computers, cellular phones, video cameras, network devices, audio devices, etc. that utilize the DC power.

### <Incorporation by reference>

The disclosures of Japanese patent application No.JP2005-086067 filed on March 24, 2005 including the specification, drawings and abstract are incorporated herein by reference.

## Claims

1. A control circuit of a DC-DC converter executing a rectification by setting the first switch and the second switch alternately in an ON-state, comprising:
a plurality of first driving units driving respectively the plurality of first switches;
a second driving unit driving the second switch; and
a selection unit stopping part of the plurality of first driving units in accordance with predetermined information .

2. A control circuit of a DC-DC converter executing a rectification by setting the first switch and the second switch alternately in an ON-state, comprising:
a first driving unit driving the first switch;
a plurality of second driving units driving respectively the plurality of second switches; and
a selection unit stopping part or all of the plurality of second driving units in accordance with predetermined information .

3. A control circuit of a DC-DC converter executing a rectification by setting the first switch and the second switch alternately in an ON-state, comprising:
a plurality of first driving units driving respectively the plurality of first switches;
a plurality of second driving units driving respectively the plurality of second switches; and
a selection unit stopping part of the plurality of first driving units, and part or all of the plurality of second driving units in accordance with predetermined information.

4. A control circuit according to Claim 1, 2 or 3, wherein the predetermined information is an input voltage value.

5. A control circuit according to Claim 1, 2 or 3, wherein the predetermined information is an output voltage value.

6. A control circuit according to Claim 1, 2 or 3, wherein the predetermined information is an input/output voltage difference value.

7. A control circuit according to Claim 1, 2 or 3 wherein the predetermined information is a load current value.

8. A DC-DC converter comprising a control circuit according to any of the preceding claims.

9. An electronic device including a DC-DC converter and a load operated by an output from the DC-DC converter, wherein the DC-DC converter comprises a control circuit according to any of the preceding claims.
